# EUROPEAN PATENT APPLICATION

(11) **EP 4 020 759 A1**
(43) Date of publication of application: **29.06.2022**
(21) Application number: 21215391.0
(22) Date of filing: 17.12.2021
(51) Int. Cl.: H02J 50/12, H02J 50/40, H02J 7/02

(54) **WIRELESS POWER TRANSMISSION CIRCUIT**

(30) Priority: 22.12.2020 US 202063129298 P
(71) Applicant: Flex, Ltd., Singapore 486123 (SG)
(72) Inventor: KADUPPADI, Vinod, Farmington Hills, MI 48334 (US)
(74) Representative: v. Bezold & Partner Patentanwälte - PartG mbB

(57) **Abstract**

A transmission circuit and method for wireless transmission of power, the circuit including a source of electrical energy, an inverter connected to the source of direct current electrical energy and configured to receive a control signal operable to alternately open and close switches of the inverter to produce an alternating current, a transmitter coil configured to receive the alternating current and generate a magnetic field for inducing a current in a receiver coil, and two tuned filter circuits between the transmitter coil and the inverter, the tuned filter circuits including an inductor and a first capacitor in series, and a second capacitor in parallel with the inductor and the first capacitor.

## Description

### TECHNICAL FIELD

The instant disclosure relates to filtering circuits and methods for use with a wireless charging circuit.

### BACKGROUND

The Wireless Power Consortium (WPC) is a worldwide organization that aims to develop and promote global standards for wireless power transfer in various application areas. As part of the WPC's mission they have compiled a number of wireless power transmission circuit designs that can be utilized by manufacturers who are members of the consortium. While these circuit designs are effective, they do not always provide sufficient filtering of the RF signal to prevent emission of signals which can interfere with other components. This is particularly true in the automotive market which has higher standards and as lower acceptable peak and average interference thresholds for electromagnetic compliance (EMC) than the standards applied to mobile communication devices generally. Accordingly, improvements are desired.

### SUMMARY

One aspect of the disclosure is directed to a transmission circuit for wireless transmission of power including: a source of direct current electrical energy. The transmission circuit also includes an inverter connected to the source of direct current electrical energy and configured to receive a control signal operable to alternately open and close switches of the inverter to produce an alternating current. The transmission circuit also includes a transmitter coil configured to receive the alternating current and generate a magnetic field for inducing a current in a receiver coil. The transmission circuit also includes two tuned filter circuits between the transmitter coil and the inverter, the tuned filter circuits including an inductor and a first capacitor in series.

Implementations of this aspect of the disclosure may include one or more of the following features. The transmission circuit further including two inductors at two outputs of the inverter and prior to the two tuned filter circuits. The transmission circuit further including at least one capacitor, in series between one of the inductors and the transmitter coil. The transmission circuit further including a first capacitor in parallel with the transmitter coil. The transmission circuit further including two additional capacitors in parallel with the first capacitor. The transmission circuit further including two capacitors, arranged one in series between each of the inductors and the transmitter coil. The transmission circuit where the transmitter coil includes three transmitter coils. The transmission circuit where each transmitter coil is in communication with a switch, such that only one transmitter coil is operably connected to the inverter at any time. The transmission circuit where the two tuned filter circuits are tuned to a fifth harmonic of a fundamental switching frequency of the inverter. The transmission circuit where the fundamental frequency is in the range of about 105kHz and 205 kHz. The transmission circuit where the fundamental switching frequency is approximately 127 kHz. The transmission circuit where each tuned filter circuit has an inductor with an inductance of between 200nH and 1.2uH. The transmission circuit where the capacitor in series with the inductor has a capacitance of between 10 nF and 100 nF. The transmission circuit further including a second capacitor in parallel with the inductor and the first capacitor. The transmission circuit where the capacitor in parallel with the inductor has a capacitance of between 1 nF and 100 nF. The transmission circuit further including a body, where the body is configured for placement within an automobile. The transmission circuit where the body is connected to a battery of the automobile to power the inverter.

Implementations of the described techniques may include hardware, a method or process, or computer software on a computer-accessible medium, including software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

### BRIEF DESCRIPTION OF THE DRAWINGS

FIG. 1 is a side cross-sectional view of one embodiment of a charging module in accordance with the disclosure;
FIG. 2 is a top view of one embodiment of the charging module, wherein one possible configuration of the transmitting member is shown;
FIG. 3 is a schematic diagram of a charging system for use in a vehicle;
FIG. 4 is a schematic diagram of an inverter and transmission circuit with a tuned inductor/capacitor (LC) filter circuit in accordance with the disclosure;
FIG. 5 is a circuit diagram of the LC filter circuit employed in FIG. 4 and FIG. 6 in accordance with the disclosure;
FIG. 6A depicts the measured interference generated by the circuits of FIGS 5 and 6 without the tuned LC filter;
FIG. 6B depicts the measured interference generated by the circuits of FIGS 5 and 6 with the tuned LC filter;
FIG. 7 is a schematic diagram of an alternative inverter and transmission circuit with a tuned LC filter circuit in accordance with the disclosure;
FIG. 8 is a flow chart for an exemplary control algorithm in accordance with the disclosure; and
FIG. 9 depicts the power increase and power decrease schemes of FIG. 7.

### DETAILED DESCRIPTION

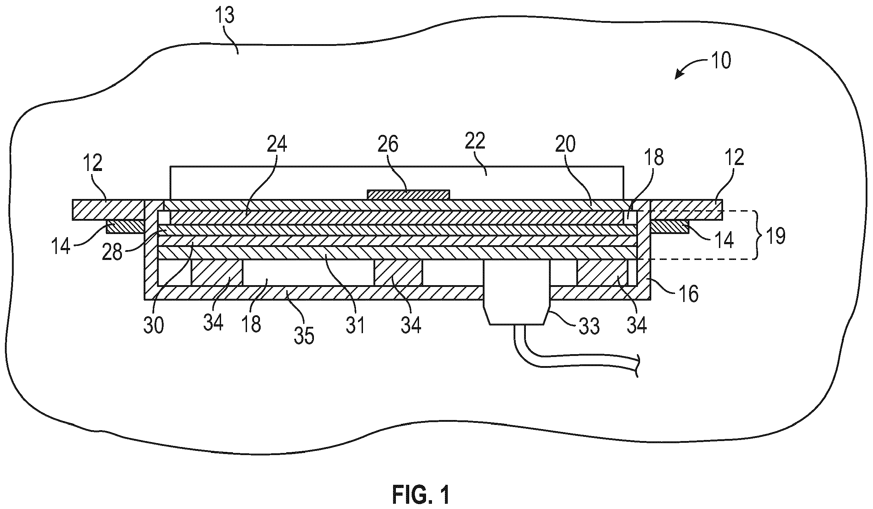

Referring now to FIG. 1, a charging module 10 is generally shown flushly mounted to a surface 12 in a vehicle (e.g., an automobile) interior 13. Preferably, the surface 12 is easily accessible and does not encumber the use of other features in the vehicle. One suitable surface 12 includes the center console area of the vehicle. To mount the charging module 10 to the surface 12, the charging module 10 may include a plurality of screw tabs 14 that are fastened to the underside of the surface 12.

The charging module 10 includes a body 16 that is preferably plastic and that defines an interior space 18 and a charging surface 20. The charging surface 20 is preferably a monochromatic Class A surface type and directly supports a chargeable device 22 such as a cellular phone or other portable electronic device that is compatible with the charging module 10. In the present embodiment, internal components are arranged in the interior space 18 in a tiered assembly 19. The first tier defines a transmitting member 24 configured to wirelessly transfer power to a receiving member 26 that is conventionally coupled to the chargeable device 22 for charging the battery of the chargeable device 22. The second tier defines a shielding member 28, such as a ferrite, to minimize the effects of the electromagnetic field (EMF) generated during wireless power transfer. The third tier defines a heat sink 30 that minimizes power dissipation and is preferably constructed from aluminum or copper. The fourth tier defines a printed circuit board 31 (herein referred to as PCB) that is configured to energize the transmitting member 24 to wirelessly charge the chargeable device 22. The PCB 31 is supplied power from a vehicle power source (not shown) and may be electrically coupled to the vehicle power source using a conventional vehicle wire harness 33. To support the tiered assembly 19, one or more support spacers 34 may be provided in the interior space 18 and disposed between the PCB 31 and a bottom surface 35 of the body 16.

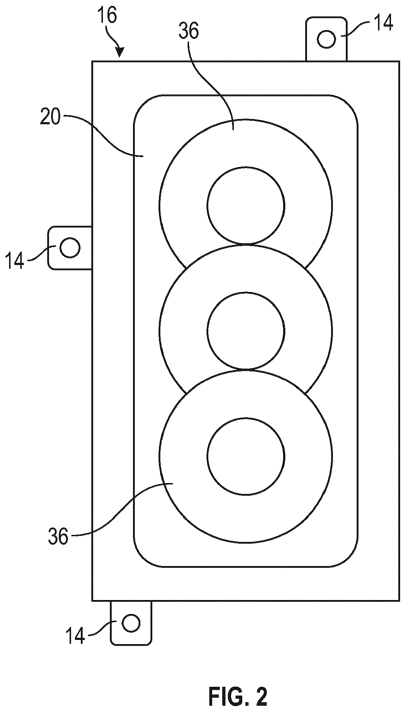

Generally, the transmitting member 24 and receiving member 26 must be accurately aligned for optimum wireless charging to occur. Therefore, one challenge in providing a wireless charger with multi-compatibility is facilitating efficient wireless power transfer between the transmitting member 24 and the receiving member 26 given the likelihood that the position of the receiving member 26 and/or charging protocol will vary depending on the device itself and/or the adopted wireless charging solution. To address this challenge, one embodiment of the charging module 10 is generally shown in FIG. 2 and is configured to charge a chargeable device 22 based on the principles of wireless induction. In this embodiment, the transmitting member 24 includes one or more transmitting coils 36 configured to inductively transfer power to the receiving member 26 of a compliant device, which typically includes a receiving coil (not shown). As previously noted, the location of the receiving member 26 for any particular chargeable device 22 may not always be readily determined, which may hinder the ability to accurately align the transmitting member 24 and receiving member 26. To account for this, three transmitting coils 36, preferably having Litz wire windings, are arrayed in the present embodiment and configured to substantially coincide with the charging surface 20 to enable accurate alignment of at least one of the transmitting coils 36 with the receiving coil so that a charging session can be initiated.

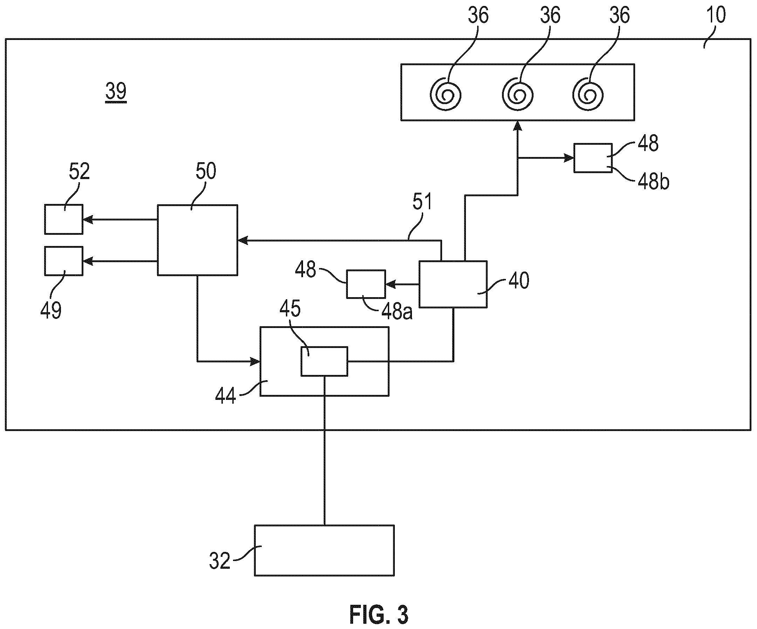

Referring now to FIG. 3 a schematic diagram of a charging system 39 for use inside a vehicle are generally shown, wherein the charging system 39 is configured to wirelessly compliant devices and includes the charging module 10 of the previous embodiments.

As shown in each schematic diagram, the charging system 39 includes a controller 40. The controller 40 is connected to the transmitting coils 36 . The controller 40 is configured to trigger wireless charging and may optionally be connected to a power circuit 44 to supply the controller 40 with the required voltage. The power circuit 44 includes a DC-DC converter 45 to convert the supplied voltage from 12 volts DC to 19 volts DC, thereby satisfying the voltage requirement of the controller 40. Either the controller 40 or the power circuit 44 is connected to the vehicle power source 32, which typically provides 12 volts DC. As should be obvious to those skilled in the art, other circuit configurations may be employed to achieve the different voltage potentials.

Optionally, the charging system 39 may include one or more status indicators 48 configured to provide charging information to a vehicle occupant and may be provided on any viewable surface of the charging module 10. For example, a first status indicator 48 *a* may be used to notify the vehicle occupant that the charger is in use. Also, the charging system 39 may include a third status indicator 48 b used to inform the vehicle occupant as to the current charge state of the chargeable device 22. Preferably, each status indicator 48 is visually differentiated from the other so that the occupant can readily discern the type of information being provided. For example, a suitable first status indicator 48 *a* may include a differently colored light and/or an illuminated logo and a suitable second status indicator 48 b may include an illuminated battery icon displaying a charge percentage and/or distribution.

The charging system 39 may also optionally include a USB port 49 to enable an occupant to forego wireless charging in favor of conventionally wire charging a chargeable device 22 by plugging it into the USB port 49. With the inclusion of the USB port 49, it is conceivable to simultaneously charge at least two chargeable devices 22, wherein one is charged using the USB port 49 and the other is charged using the charging module 10. It should further be appreciated that other wired charging connections may be employed.

Further included in the charging system 39 is a microcontroller 50 or other suitable processing unit that is configured to communicate with other charging system 39 components, such as the controller 40 via a local interconnect network (LIN) 51 and communicates with the vehicle network via a controller area network (CAN) bus 52. As such, the added benefit of network connectivity opens the door to a variety of useful features that incorporate the charging system 39 with preexisting vehicle systems. For example, in instances where the vehicle battery becomes severely low, an active charging session may be selectively disabled to allow the vehicle battery to better support other vehicle systems. In another example, an interactive vehicle system such as the front center display and/or audio system, may be used to provide useful charging information such as the state of charge for a given chargeable device 22 or notify an occupant if an incompatible device is detected. In yet another example, the interactive vehicle system may also be used to notify an occupant if inadvertent dual charging is detected, which typically occurs when a chargeable device 22 being charged via the USB port 49 is also placed on the charging surface 20 to induce wireless charging and may potentially damage the chargeable device 22 and/or the charging system 39. While these are just a few instances benefiting from network connectivity, it should be obvious to those skilled in the art that many more useful applications are possible.

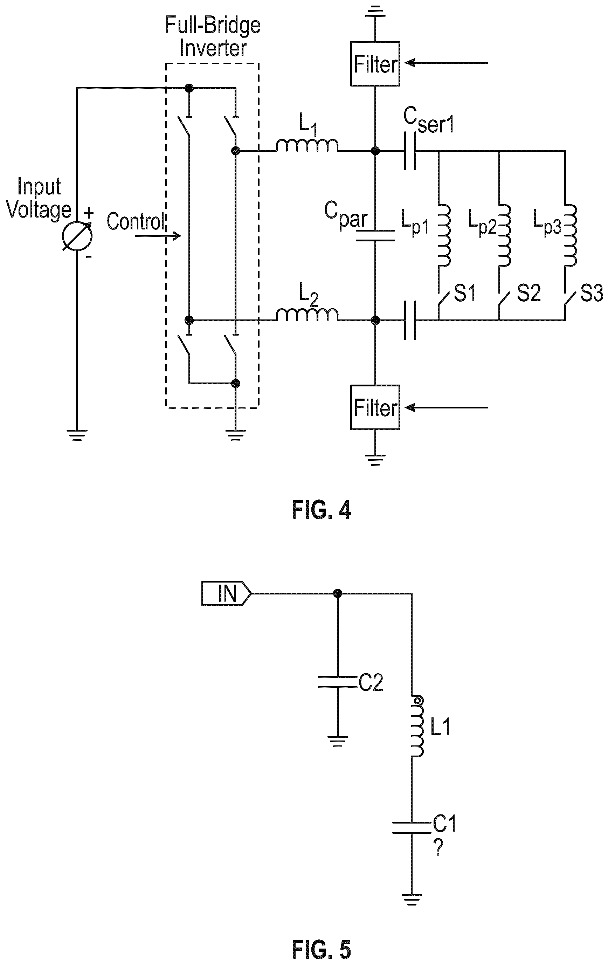

In operation upon sensing the presence of a chargeable device 22, the controller 40 and microcontroller 50 engage in a process of initiating charging. One aspect of this is to determine which of the coils 36 is best positioned to provide power to the receiving member 26 thus ensuring that only one of the coils 36 (depicted as inductors Lp1, Lp2, and Lp3) are switched on to allow power to flow through the coil 36. The base circuit of FIG 4 is the MP-A13 circuit as described in the WPC Qi Wireless Power Transfer System Version 1.2.4 for Power Transmitter reference designs. However, in accordance with the disclosure an additional filter is added after the initial filter in the MP-A13 circuit. This filtering is performed by an additional tuned LC filtering circuit. The make-up of the tuned LC filtering circuit is depicted in Fig. 5 and is composed of an inductor L1 and capacitor C1 in series with a capacitor C2 in parallel with inductor L1 and capacitor C1.

In accordance with the disclosure the inductor L1 has an inductance of between 200nH and 1.2uH. Capacitor C1 has a capacitance of between 10nF and 100nF and capacitor C2 has a capacitance of between 1nF and 100nF. The exact value of impedance or capacitance can be any value within the identified range, and may be incremented by 1, 2, 5, 10, 25, or 50 nH or nF as needed to construct a tuned LC filtering circuit suitable for a given fundamental switching frequency of the inverter. The inverter may be a full bridge inverter or a half bridge inverter.

In at least one embodiment, the second capacitor C2 is eliminated from the tuned LC filtering circuit. In some embodiments the second capacitor may be determined to provide secondary filtering that may not be required at a selected fundamental switching frequency.

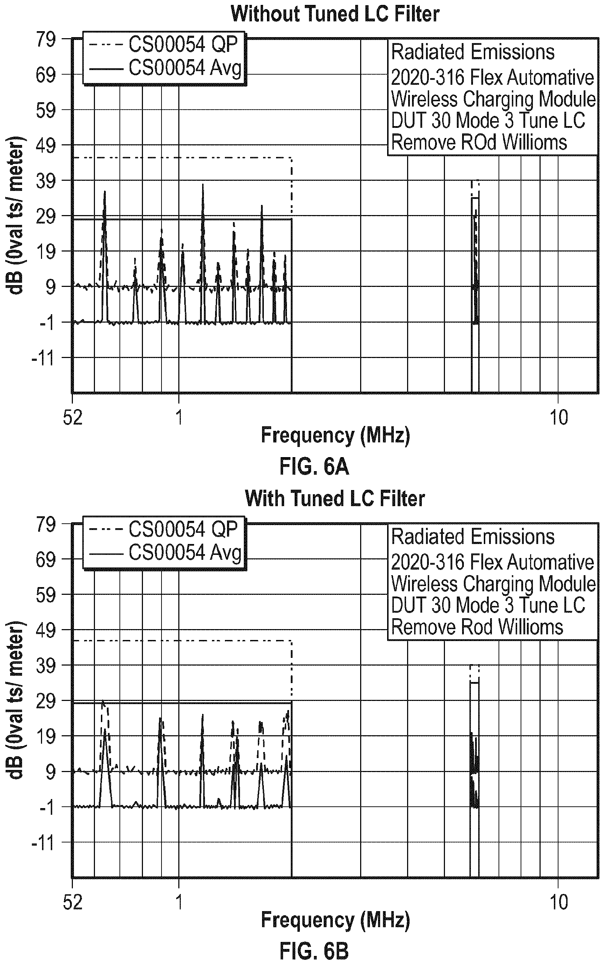

The LC filter circuit may be tuned to for example the 5^{th} harmonic of the fundamental switching frequency. The fundamental switching frequency may be within the range of 105 to 205 kHz. An in accordance with the instant disclosure, is typically selected as any 5 kHz interval within the specified range, however, those of skill in the art will recognize that any specific frequency value within the range may be selected without departing from the scope of the disclosure. In one example if the fundamental switching frequency is approximately 127 kHz, the 5^{th} harmonic is at approximately 630 kHz. As will be appreciated, 630 kHz is within the AM frequency band, and this can be picked up by AM radio receivers as might be found in most automobiles. Accordingly, by tuning the LC filter such that it substantially eliminates the transmission of signals that are within the frequency band of automobile receivers, EMC emissions can be achieved. FIGS 6A and 6B depict the change in emissions of the power transmission circuit of FIG. 4 without the use of the tuned LC filter and with the tuned LC filter. As can be seen in FIG. 6A, without filtering, while the peak emissions falls below the maximum acceptable value (black trace always below pink threshold) the average emissions does occasionally exceed the average acceptable value (blue trace occasionally above blue threshold). In contrast, in FIG. 6B, both the peak values and the average values remain at all times below the acceptable values.

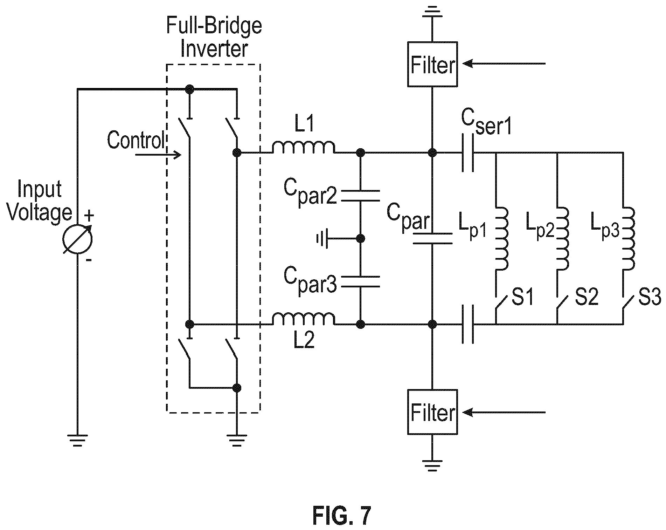

FIG. 7 depicts a further example of a WPC Qi Wireless Power Transfer System Version 1.2.4 for Power Transmitter reference design being improved by addition of the tuned LC filtering circuit of FIG. 5 being added after the initial filtering stage. The base circuit depicted in FIG. 7 is the MP-A18 circuit and again the tuned LC filtering circuit of FIG. 5 is connected immediately following the original filtering provided by the inductors L1 and L2. One of the advantages of utilizing this circuit in connection with the tuned LC filtering circuit is that the entire charger can dispense with the power circuit 44 and no DC-DC converter need be employed in the wireless charger. As can be appreciated, the elimination of the converter can result in a significant cost and space savings for the charger. Further, those of skill in the art will recognize that the benefits of the tuned filter circuit of FIG. 5 may be experienced by in any of the transmission circuits described in the WPC Qi Wireless Power Transfer System Version 1.2.4 for Power Transmitter documentation (or any subsequent revisions of this documentation such as the Version 1.3 current in draft) without departing from the scope of the disclosure.

A further embodiment of the disclosure is directed to an alternative design of both the MP-A13 and the MP-A18 base circuits. As is known, within the WPC Qi Wireless Power Transfer System Version 1.2.4 for Power Transmitter documentation, there are specified values and ranges for the inductors and capacitors in the circuits. In accordance with the disclosure it has been determined that utilization of inductors and capacitors having inductance and capacitance values outside of the specified ranges can also achieve the desired filtering of the 5^{th} harmonic of the fundamental frequency. Accordingly, L1 and L2 (See FIG. 7) may have an inductance of 2.2 uH or 1.5uH, Cpar1 may have a capacitance of 200nF and Cpar2 and 3 may have a capacitance of 100nF. All of these are outside of the ranges specified by the WPC guidelines. Utilization of these values for the inductance and capacitance of the inductors and capacitors results in a substantial reduction in interference emissions while having less than a 10% negative impact on the transmitter circuit.

Still a further embodiment of the disclosure is directed to a software solution to achieve a similar reduction in radiated emissions. In accordance with this aspect dynamic frequency shots are employed to maintain a 50% duty cycle of the inverter and therewith the inductors L1 and L2 filtering the output of the inverter. As is known frequency is inversely proportional to the duty cycle and the power transferred.

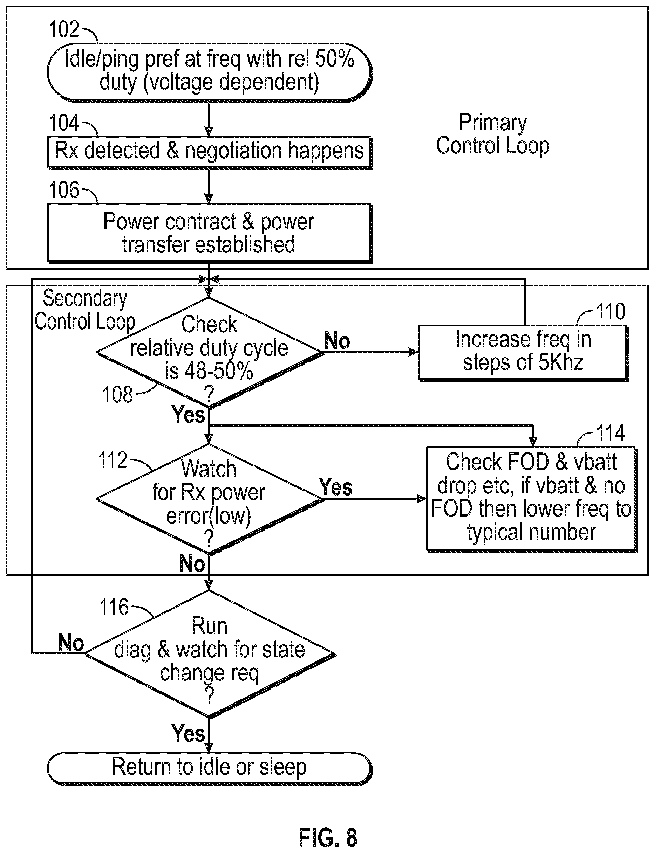

As depicted in FIG. 8 the software application is actually a dual control loop scheme. The first control loop is a standard start-up scheme also referred to as a phase shift scheme. Periodically at step 102 the transmitter circuit sends a ping at a selected frequency with a 50% duty cycle. Upon receipt of a response at step 104, the receiver is detected, and a negotiation ensues. At step 106 a power contract (agreement between transmitter and receiver) is achieved, and power transfer commences. This completes the first control loop. Once power transfer commences, a second control loop is commenced at step 108 the duty cycle of the inverter is checked to ensure that it is within 48-50%. If the duty cycle is outside of the range, then the frequency is increased at step 110, for example in 5 kHz steps. This may be observed when there is a request for reduction in power. As a result, the primary control scheme will lower the phase of the supplied power necessitating an increase in frequency to maintain the duty cycle. Steps 108 and 110 are then employed to move maintain the relative duty cycle near 50%. Steps 108 and 110 are repeated until the inquiry at step 108 is answered with a yes and the process continues to step 112, where the receiver power error is monitored. If a receiver low power error is detected (or a request for more power is received) the process moves to step 114 where foreign body detection, battery voltage loss, and other receiver parameters are assessed. If no foreign object is detected and the battery voltage is acceptable, then the fundamental frequency of the inverter is reduced to a typical value and the process returns to step 112. The primary control look will adjust the phase to maintain the power, and if the duty cycle is lower than 50% the second control loop (e.g., steps 108 and 110) will adjust the duty cycle to achieve 50%. After the lowering of the frequency in step 114, the process continues to step 116 where monitoring for a state change request is undertaken. If no request is received, the process returns to step 108. If a state change is received the process ends.

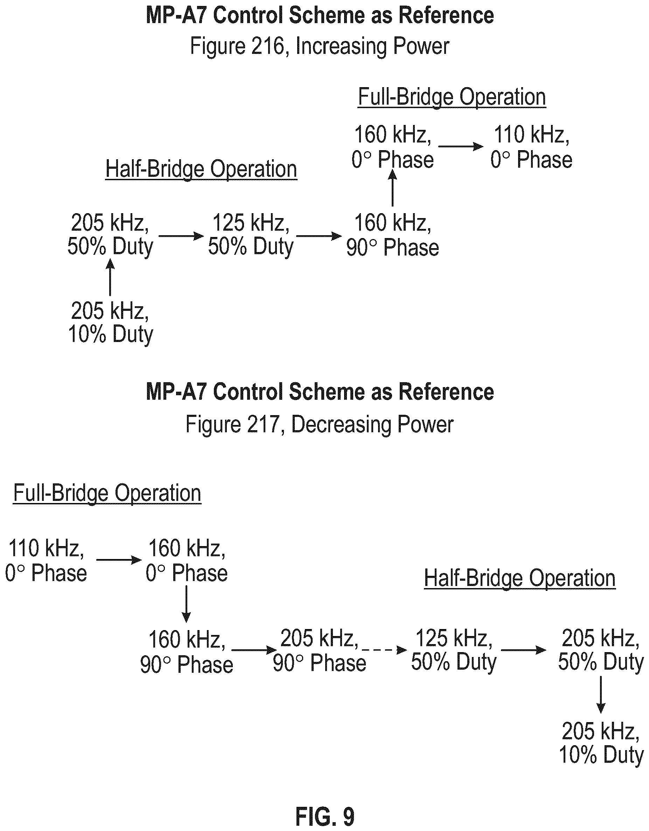

FIG. 9 depicts the two schemes for increasing and decreasing the power of the transmitting circuit. Both schemes depict the changes in frequency, phase, and duty cycle for each change.

While several aspects of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular aspects.

## Claims

1. A transmission circuit for wireless transmission of power comprising:
a source of direct current electrical energy;
an inverter connected to the source of direct current electrical energy and configured to receive a control signal operable to alternately open and close switches of the inverter to produce an alternating current;
a transmitter coil configured to receive the alternating current and generate a magnetic field for inducing a current in a receiver coil; and
two tuned filter circuits between the transmitter coil and the inverter, the tuned filter circuits including an inductor and a first capacitor in series.

2. The transmission circuit of claim 1, further comprising two inductors at two outputs of the inverter and prior to the two tuned filter circuits.

3. The transmission circuit of claim 2, further comprising at least one capacitor, in series between one of the inductors and the transmitter coil.

4. The transmission circuit of claim 2, further comprising two capacitors, arranged one in series between each of the inductors and the transmitter coil

5. The transmission circuit of claim 3, further comprising a first capacitor in parallel with the transmitter coil.

6. The transmission circuit of claim 5, further comprising two additional capacitors in parallel with the first capacitor.

7. The transmission circuit of claim 1, wherein the transmitter coil comprises three transmitter coils.

8. The transmission circuit of claim 7, wherein each transmitter coil is in communication with a switch, such that only one transmitter coil is operably connected to the inverter at any time.

9. The transmission circuit of claim 1, wherein the two tuned filter circuits are tuned to a fifth harmonic of a fundamental switching frequency of the inverter.

10. The transmission circuit of claim 9, wherein the fundamental switching frequency is in the range of about 105 kHz and 205 kHz.

11. The transmission circuit of claim 10, wherein the fundamental switching frequency is approximately 127 kHz.

12. The transmission circuit of claim 10, wherein each tuned filter circuit has an inductor with an inductance of between 200nH and 1.2uH.

13. The transmission circuit of claim 12, wherein the capacitor in series with the inductor has a capacitance of between 10 nF and 100 nF.

14. The transmission circuit of claim 13, wherein the two tuned filter circuits each include a second capacitor in parallel with the inductor and the first capacitor.

15. The transmission circuit of claim 14, wherein the capacitor in parallel with the inductor has a capacitance of between 1 nF and 100 nF.

16. The transmission circuit of claim 1, further comprising a body, wherein the body is configured for placement within an automobile.

17. The transmission circuit of claim 15, wherein the body is connected to a battery of the automobile to power the inverter.
